# FASCICULE DE BREVET EUROPEEN

(11) **EP 2 334 486 B1**
(45) Date de publication et mention de la délivrance du brevet: **05.12.2012**
(21) Numéro de dépôt: 09755955.3
(22) Date de dépôt: 02.10.2009
(51) Int. Cl.: B29C 70/46, B29C 33/48, B29C 70/44, B29C 70/54

(54) **PROCEDE DE FABRICATION D'UNE PIECE EN MATERIAU COMPOSITE AVEC UNE FORME CONCAVE, NOTAMMENT UNE SECTION EN U ET DISPOSITIF POUR SA MISE EN OEUVRE**
VERFAHREN ZUR HERSTELLUNG EINES KONKAV GEFORMTEN, INSBESONDERE U-FÖRMIGEN, TEILS IN EINEM VERBUNDMATERIAL UND VORRICHTUNG ZUR DURCHFÜHRUNG DES VERFAHRENS
METHOD FOR PRODUCING A CONCAVE-SHAPED IN PARTICULAR U-SHAPED PIECE IN A COMPOSITE MATERIAL AND DEVICE FOR CARRYING OUT THE SAME

(30) Priorité: 06.10.2008 FR 0856753
(43) Date de publication de la demande: 22.06.2011
(73) Titulaire: Airbus Operations, 31060 Toulouse (FR)
(72) Inventeur: BLOT, Philippe, F-44000 Nantes (FR); GOHIER, Sébastien, F-44620 La Montagne (FR); LANNUZEL, Mathieu, F-44800 Saint Herblain (FR)
(74) Mandataire: Fantin, Laurent
(86) Numéro de dépôt international: PCT/FR2009/051883
(87) Numéro de publication internationale: WO 2010/040934

(56) Documents cités:
- WO-A-97/36735
- DE-A1- 4 234 002
- US-A1- 2006 231 981

## Description

La présente invention se rapporte à un procédé de fabrication d'une pièce en matériau composite avec une forme concave, notamment un longeron avec une section en U. Elle se rapporte également à un dispositif pour sa mise en oeuvre visant d'une part à assurer une imprégnation homogène d'une préforme de fibres par injection ou infusion d'un produit apte à former une matrice, et d'autre part à garantir un bon état de surface et une précision dimensionnelle optimale notamment au niveau de la surface extérieure.

Les pièces réalisées en matériau composite comprennent une matrice, par exemple en résine, renforcée par des fibres. Selon un mode de réalisation répandu, les fibres se présentent sous la forme d'une préforme de fibres, d'un ou plusieurs pli(s) tissé(s) ou non.

Préalablement à la phase de polymérisation, le produit formant la matrice doit imprégner de manière homogène cette préforme pour obtenir une pièce ayant des caractéristiques optimales.

Selon un premier mode opératoire dit par injection, le produit formant la matrice, généralement de la résine, est injecté dans la préforme en un ou plusieurs points, voire sur toute la surface de la préforme, éventuellement avec un média de diffusion.

Selon un autre mode opératoire dit par infusion, le produit formant la matrice est intégré dans la préforme et se présente par exemple sous forme d'un ou plusieurs film(s) de résine intercalé(s) ou accolé(s) aux plis formant ladite préforme.

Pour effectuer cette imprégnation, on utilise un outillage tel que décrit notamment dans les documents US2004/0219244 ou US2005/0031720 et illustré sur la figure 1.

US 2006/231901 décrit les caractéristiques des préambules des revendications 1 et 9.

Selon ce document, la préforme 10 est placée dans une première enceinte 12 délimitée par un support 14 et une première membrane 16 semi-étanche, à savoir perméable au gaz mais étanche au produit apte à former la matrice, au moins un point d'alimentation 18 étant prévu dans ladite première enceinte 12.

En complément, l'outillage comprend une seconde enceinte 20 délimitée d'une part par une seconde membrane 22 étanche au gaz, et d'autre part, par la première membrane 16 semi-étanche, ladite enceinte 20 comportant au moins un orifice 24 pour extraire les gaz contenus dans ladite seconde enceinte 20 et laisser passer ainsi les gaz présents dans ladite première enceinte 12. L'aspiration des gaz dans la première enceinte 12 engendre la diffusion du produit apte à former la matrice dans toute la préforme.

Ainsi, la première membrane 16 semi-étanche assure pendant la phase d'infusion ou d'injection un remplissage et un dégazage optimum de la préforme sans aspirer le produit apte à former la matrice.

Des moyens d'étanchéité 26 sont prévus pour assurer l'étanchéité entre le support 14 et la première membrane 16 semi-étanche ainsi que des moyens d'étanchéité 28 entre le support 14 et la seconde membrane 22 étanche.

En complément, un tissu drainant 30 peut être placé dans la seconde enceinte afin de favoriser l'évacuation des gaz.

Pour obtenir le lissage de la surface de la préforme en contact avec la première paroi 16 semi-étanche, une plaque de lissage 32 peut être utilisée et placée dans la seconde enceinte 20, intercalée entre le tissu drainant et la première paroi 16 semi-étanche. Elle permet également d'homogénéiser les efforts de pression sur la préforme.

Selon un mode de réalisation, la membrane 16 semi-étanche est constituée d'un tissu microporeux, le faible diamètre des pores permettant le passage des gaz mais bloquant le passage des fluides visqueux tel que le produit apte à former la matrice.

La présente invention se rapporte plus précisément à la fabrication de longerons, utilisés dans le domaine aéronautique, par exemple au niveau du caisson central d'un avion.

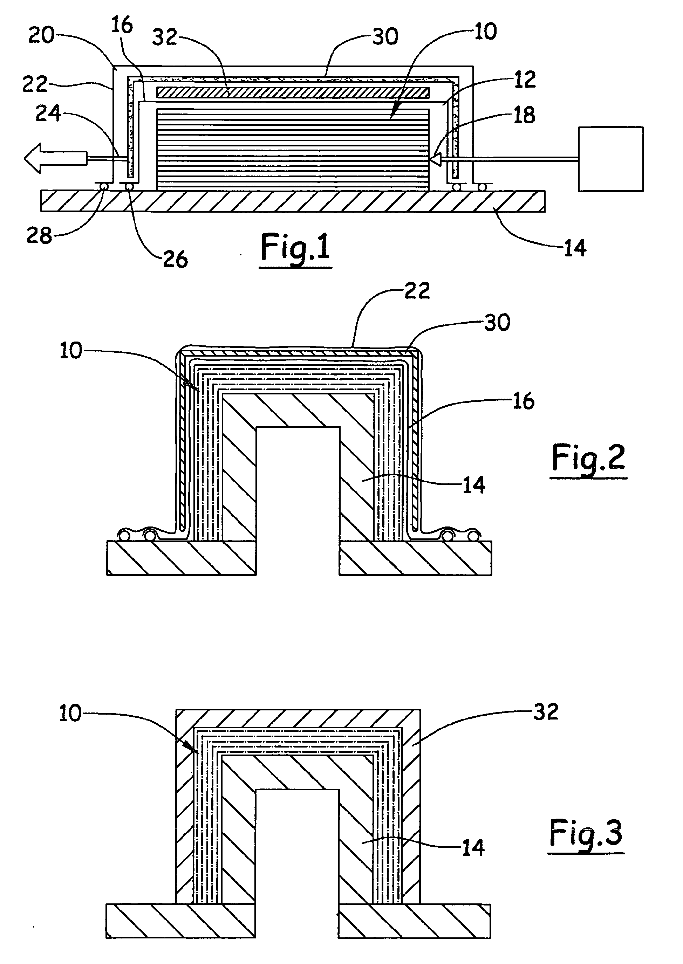

Selon un mode opératoire illustré sur la figure 2 pour obtenir un longeron avec une section en U, on utilise les mêmes éléments que ceux illustrés sur la figure 1, le support 14 ayant une forme en U adapté à la face intérieure de la section en U. Les nappes ou plis de fibres sont drapés sur le support 14 de manière automatique ou manuelle.

En suivant, les autres éléments du dispositif sont rapportés sur la préforme en U.

Ce mode opératoire ne donne pas satisfaction car il ne permet pas de maîtriser les épaisseurs et d'obtenir au niveau de la surface externe (celle qui n'est pas en contact avec le support 14) un état de surface satisfaisant.

Par conséquent, suite à la polymérisation, il est nécessaire de rectifier la géométrie de la pièce ainsi réalisée pour l'assembler aux pièces adjacentes. Cette opération supplémentaire conduit à augmenter le coût de fabrication de la pièce et à une perte de résistance en raison de la rupture de fibres pendant la rectification géométrique de la pièce.

Selon un autre mode opératoire illustré sur la figure 3, la pièce est réalisée entre un moule 14 et un contre-moule 32 :

Après le drapage des nappes ou plis de fibres sur le support 14 disposé entre les branches du U, le contre-moule 32 est mis en place.

Même s'il permet une meilleure maîtrise des épaisseurs, ce mode opératoire ne donne pas satisfaction car il est nécessaire d'utiliser un contre-moule 32 ne se dilatant pas avec la température, par exemple un matériau à base de carbone, pour permettre le démoulage de la pièce ce qui conduit à augmenter significativement le coût de l'outillage. En effet, le contre-moule 32 aurait tendance à serrer la pièce en raison d'un phénomène de contraction lors de la phase de refroidissement s'il était métallique.

Aussi, la présente invention vise à pallier aux inconvénients de l'art antérieur en proposant un procédé de réalisation d'une pièce en matériau composite comportant une forme concave, notamment une section en U, permettant de maîtriser les épaisseurs et d'obtenir un état de surface satisfaisant.

A cet effet, l'invention a pour objet un procédé de fabrication d'une pièce en matériau composite avec une forme en creux et comportant une préforme de fibres noyée dans une matrice, consistant à placer ladite préforme dans une première enceinte délimitée par un moule en contact avec la surface de la pièce à réaliser à l'extérieur de la forme en creux et un contre-moule en contact avec la surface de la pièce à réaliser à l'intérieur de la forme en creux, caractérisé en ce qu'il consiste à utiliser un moule en au moins deux parties et des moyens pour maîtriser l'écartement desdites au moins deux parties qui sont jointives grâce au phénomène de dilatation lors de la phase de polymérisation.

D'autres caractéristiques et avantages ressortiront de la description qui va suivre de l'invention, description donnée à titre d'exemple uniquement, en regard des dessins annexés sur lesquels :
- la figure 1 est une vue en coupe illustrant un outillage pour réaliser une pièce en matériau composite par injection selon l'art antérieur,
- la figure 2 est une vue en coupe illustrant un outillage pour réaliser un longeron en U selon une première variante de l'art antérieur,
- la figure 3 est une vue en coupe illustrant un outillage pour réaliser un longeron en U selon une autre variante de l'art antérieur, et
- les figures 4A à 4G sont des coupes illustrant les différentes étapes d'un procédé de réalisation d'une pièce en matériau composite avec une section en U selon l'invention.

Sur la figure 4F, on a représenté en 50 au moins une préforme de fibres destinée à être noyée dans une matrice, par exemple une résine, de manière à obtenir après polymérisation une pièce en matériau composite formant une pièce d'un aéronef. Toutefois, le procédé de l'invention n'est pas limité au domaine aéronautique.

La présente invention se rapporte plus particulièrement à une préforme avec une section en U permettant d'obtenir par exemple un longeron.

Cependant, l'invention n'est pas limitée à cette forme de section, la section pouvant être en V ou avoir une forme concave.

Pour la suite de la description, on entend par surface intérieure, la surface en creux à savoir les surfaces des branches et de la base de la section en U orientées vers la zone située entre les branches du U et par surface extérieure, la surface opposée.

Selon les variantes, la préforme peut être obtenue par empilage de plis de fibres ou par l'assemblage de panneaux de fibres, les fibres pouvant être disposées selon un arrangement organisé ou aléatoire.

La matrice est réalisée à partir d'un produit susceptible d'être fluide dans un premier état et d'être solide dans un deuxième état. A titre d'exemple, la matrice est formée de résine.

Le produit apte à former la matrice n'est pas plus décrit car il est connu de l'homme du métier et peut varier en fonction des caractéristiques recherchées. Selon un premier mode opératoire dit par injection, le produit apte à former la matrice peut être injecté dans la préforme et provenir d'un réservoir distant de la préforme.

Selon un autre mode opératoire dit par infusion, le produit apte à former la matrice peut être stocké sous forme solide dans la préforme, par exemple sous forme d'au moins un film.

Selon l'invention, le dispositif comprend un premier moule 52 dont les formes sont adaptées à celles des surfaces extérieures de la pièce à réaliser et un contre-moule 54 dont les formes sont adaptées à celles des surfaces intérieures de la pièce à réaliser.

Ainsi, le moule est en contact avec la surface de la pièce à réaliser située à l'extérieur de la forme en creux et le contre-moule est en contact avec la surface de la pièce à réaliser située au niveau de la forme en creux.

Le contre-moule 54 comprend une pluralité d'orifices 56 permettant le passage de gaz.

Selon un mode de réalisation adapté pour la fabrication de pièce en U, le contre-moule à une section en U, d'épaisseur sensiblement constante sur sa section, avec une base 58 et deux branches 60 sensiblement parallèles et des rebords 62 prévus au niveau des extrémités desdites branches 60, s'étendant parallèlement à la base 58 vers l'extérieur desdites branches 60.

De préférence, le contre-moule se présente sous la forme d'au moins une plaque avec des conduits, débouchant de part et d'autre de ladite au moins une plaque, prévus au niveau de la base 58 et des branches 60. Selon un mode de réalisation, les conduits 56 sont obtenus par perforation ou microperforation.

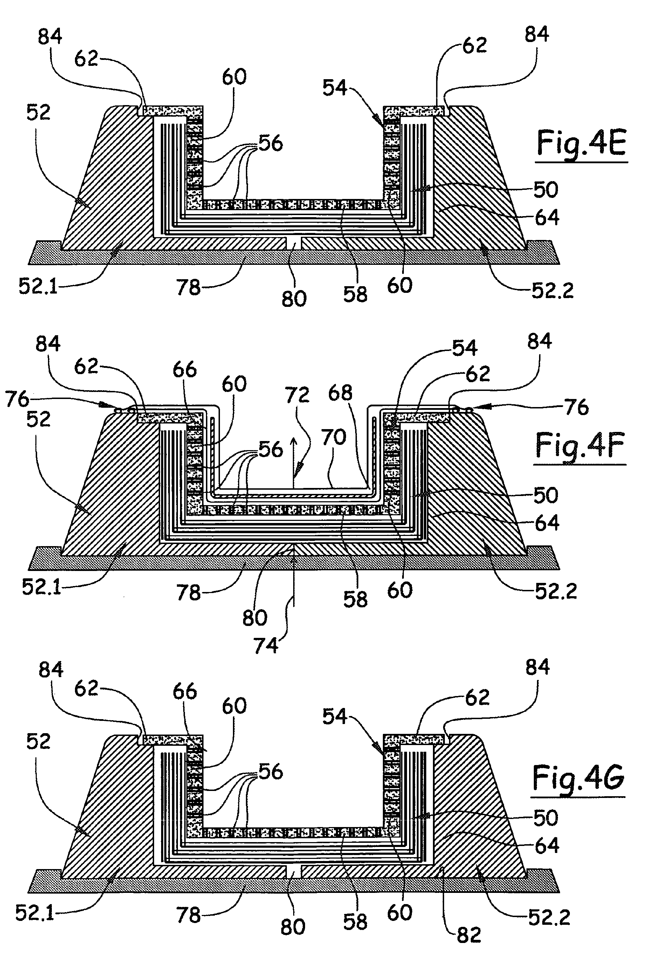

Lorsque le moule et le contre-moule sont emboîtés l'un dans l'autre, ils délimitent entre eux une première enceinte 64 dans laquelle est disposée la préforme 50. Les rebords 62 du contre-moule 54 prennent appui contre des épaulements ménagés au niveau du moule 52 comme illustré sur la figure 4F, au moins lors de la phase de polymérisation pour que les épaisseurs de la pièce soient dans les tolérances demandées.

Comme illustré sur la figure 4F, le dispositif comprend également une première paroi 66 semi étanche, à savoir perméable au gaz et imperméable au produit apte à former la matrice, ladite paroi recouvrant au moins le contre-moule 54, une deuxième enceinte 68 délimitée par une seconde paroi 70 étanche au gaz et ladite première paroi 66 semi étanche, ainsi que des moyens 72 pour extraire les gaz de la deuxième enceinte 68.

Les moyens 72 pour extraire les gaz comprennent au moins un conduit communiquant avec la deuxième enceinte 68 via au moins un orifice. Ces moyens 72 ne sont pas plus décrits car ils sont connus de l'homme du métier. Dans le cas d'un mode opératoire par injection, le dispositif comprend au moins une alimentation 74 en produit apte à former la matrice débouchant dans la première enceinte 64 via au moins un orifice. Cette alimentation n'est pas plus détaillée car elle est connue de l'homme du métier et peut avoir différentes configurations en fonction notamment du produit apte à former la matrice et/ou de la pièce à réaliser.

La seconde paroi 70 étanche au gaz peut se présenter sous la forme d'une membrane souple et étanche, comme les dispositifs de l'art antérieur.

Selon un mode de réalisation, la membrane 66 perméable au gaz est constituée d'un tissu micro-poreux, par exemple un tissu de type Gore-tex^{®}.

Des moyens d'étanchéité 76 sont prévus entre la première paroi 66 et le moule 52 ainsi qu'entre la seconde paroi 70 et le moule 52.

En complément, le dispositif peut comprendre des tissus à délaminer de part et d'autre de la préforme afin de favoriser le démoulage de la pièce réalisée ainsi qu'un grillage avec un revêtement anti-adhérent ou associé à un tissu à délaminer en contact direct avec le support 52 pour favoriser la diffusion surfacique pour les préformes de grandes dimensions du produit apte à former la matrice avant injection dans la préforme. Le grillage assurant la diffusion de la résine s'étend sur la majorité de la surface de la préforme 50 pour permettre de réaliser des pièces de grandes dimensions.

Selon l'invention, le moule 52 et contre-moule 54 sont métalliques. A titre d'exemple, ils sont réalisés à partir d'un alliage d'aluminium.

Le fait de ne pas réaliser au moins un des éléments moule ou contre-moule en un matériau ne se dilatant pas avec la température permet de réduire les coûts de l'outillage et donc de la pièce réalisée.

Selon l'invention, le moule 52 disposé à l'extérieur du U est réalisé en au moins deux parties 52.1 et 52.2, la zone de jonction des deux parties étant disposée au niveau de la base, et le dispositif comprend des moyens 78 pour maîtriser l'écartement des deux parties 52.1 et 52.2 et de la sorte contrôler les épaisseurs de la pièce à réaliser. De préférence, l'alimentation 74 en produit apte à former la matrice peut être faite à travers le plan de joint 80.

Cet agencement permet également de pouvoir démouler le moule après le refroidissement, le moule ayant tendance à se contracter lors de son refroidissement.

Selon un mode de réalisation, le plan de jonction 80 est disposé au niveau du plan médian de la pièce à réaliser.

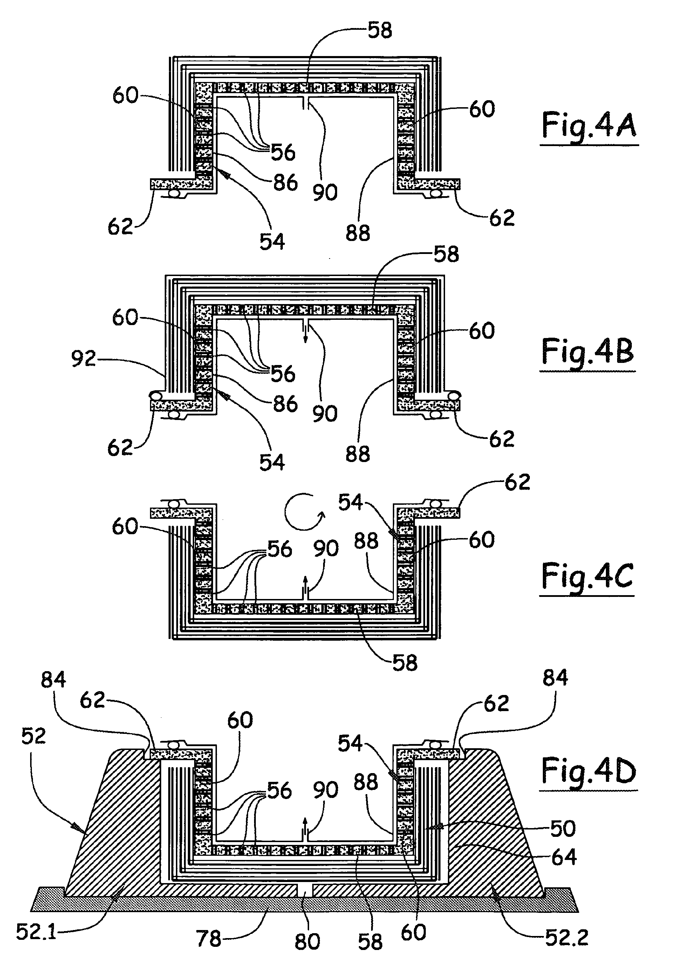

Les deux parties du moule 52 sont dimensionnées de manière à être jointives lors de la phase de polymérisation (figure 4F), soit à une température élevée et à être écartées préalablement à la phase de polymérisation (figures 4E, 4D et 4G) ou après la phase de polymérisation, soit à température moins élevée.

Selon un mode de réalisation, les moyens 78 pour maîtriser l'écartement des deux parties 52.1 et 52.2 du moule comprennent un socle comportant au niveau de sa surface supérieure une forme en cuvette avec un fond 82 offrant un plan d'appui sur lequel reposent et peuvent glisser les deux parties 52.1 et 52.2 et des bords 84 contre lesquels les deux parties 52.1 et 52.2 viennent en appui au moins lors de la phase de polymérisation pour maîtriser l'écartement entre lesdites parties.

En variante, les moyens 78 pour maîtriser l'écartement des deux parties 52.1 et 52.2 du moule peuvent se présenter sous forme de bretelles ou de tirants en un matériau se dilatant très peu avec la température. Dans le cas de tirants, les deux parties du moule peuvent coulisser le long desdits tirants jusqu'à prendre appui contre des butées prévues à chaque extrémité desdits tirants, au moins lors de la phase de polymérisation pour maîtriser l'écartement entre lesdites parties.

Selon les différentes variantes, les moyens 78 comprennent d'une part des moyens de guidage pour contrôler les mouvements des deux parties 52.1 et 52.2 du moule et autoriser un mouvement d'écartement, et d'autre part, des butées contre lesquelles peuvent prendre appui les deux parties 52.1 et 52.2 du moule au moins lors de la phase de polymérisation pour maîtriser l'écartement entre lesdites parties 52.1 et 52.2.

Le contre-moule 54 est rigide ou semi-rigide de manière à pouvoir supporter les opérations de drapage sans se déformer, les formes intérieures du contre-moule 54 correspondant à la géométrie intérieure de la pièce à réaliser à température de polymérisation de la résine utilisée pour former la matrice.

Le dispositif est utilisé de la manière suivante.

Comme illustré sur la figure 4A, le contre-moule 54 est dans un premier temps équipé au niveau de sa surface intérieure 86 d'un sac à vide 88 et d'un embout 90 pour aspirer les gaz. De préférence, on prévoit également un film semi-étanche (perméable aux gaz mais étanche à la résine) et un tissu drainant placés entre le contre-moule 54 et le sac à vide 88.

En suivant, le contre-moule 54 est disposé à l'envers, les rebords 62 reposant sur un support. Les plis ou nappes sont drapés sur le contre-moule 54 de manière à former une préforme. Avantageusement, un tissu à délaminer est intercalé entre le contre-moule et la préforme. Ainsi, le contre-moule est utilisé comme un poinçon de drapage.

Comme illustré sur la figure 4B, la préforme est compactée sous vide à une température de l'ordre de 100 à 150°C (suivant la nature du matériau). A cet effet, une membrane de compactage 92 recouvre la préforme, des moyens d'étanchéité intercalés entre ladite membrane 92 et le contre-moule 54 étant prévus en périphérie de la préforme pour que le sac à vide et la membrane de compactage forme une enceinte. Pour obtenir le compactage, on extrait les gaz via l'embout 90.

De préférence, la membrane de compactage 92 a des formes adaptées à la préforme afin de ne pas écraser la préforme au niveau des angles. Cette phase de compactage permet de limiter les risques de défaut au niveau des angles.

En suivant, la membrane de compactage 92 est retirée et le contre-moule 54 est retourné, comme illustré sur la figure 4C, pour être placé dans le moule 52, comme illustré sur la figure 4D. Au préalable, un tissu à délaminer et un grillage diffuseur sont interposés entre la préforme et le moule 52.

Pour maintenir la préforme en contact contre le contre-moule lors du retournement et de l'introduction dans le moule 52, on génère une dépression grâce à l'embout 90.

Ainsi, le contre-moule est utilisé comme un outil de manutention de la préforme. En suivant, comme illustré sur la figure 4E, le sac à vide 88 et les éventuels autres éléments utilisés lors du drapage et du compactage de la préforme peuvent être retirés.

Enfin, on rapporte la première paroi 66, un tissu drainant, la seconde paroi 70, ainsi que les différents moyens d'étanchéité ou autres éléments nécessaire à l'imprégnation homogène de la résine dans la préforme.

Selon un mode opératoire dit par injection, on prévoit une alimentation en résine, la dépression dans l'enceinte 68 permettant d'homogénéiser l'imprégnation des fibres par la résine.

Après polymérisation, on retire les différentes membranes, comme illustré sur la figure 4G. Le démoulage est effectué à froid, à une température inférieure à 50°C pour profiter du différentiel de retrait thermique de chaque partie du moule et du contre moule par rapport à celui de la pièce qui provoque la dissociation du contre-moule et de la pièce et d'au moins une partie du moule et de la pièce.

## Revendications

1. Procédé de fabrication d'une pièce en matériau composite avec une forme en creux et comportant une préforme de fibres (50) noyée dans une matrice, consistant à placer ladite préforme (50) dans une première enceinte (64) délimitée par un moule (52) en contact avec la surface de la pièce à réaliser à l'extérieur de la forme en creux et un contre-moule (54) en contact avec la surface de la pièce à réaliser à l'intérieur de la forme en creux, ce procédé consiste à utiliser un moule (52) en au moins deux parties (52.1, 52.2) et des moyens (78) pour maîtriser l'écartement desdites au moins deux parties (52.1, 52.2) **caractérisé en ce que** les deux parties sont jointives grâce au phénomène de dilatation lors de la phase de polymérisation.

2. Procédé de fabrication d'une pièce en matériau composite selon la revendication 1, **caractérisé en ce qu'**il consiste à utiliser pour maîtriser l'écartement desdites au moins deux parties (52.1, 52.2) des moyens de guidage pour autoriser un mouvement d'écartement entre les deux parties (52.1, 52.2) du moule et des butées contre lesquelles peuvent prendre appui les deux parties (52.1, 52.2) du moule au moins lors de la phase de polymérisation pour maîtriser l'écartement entre lesdites parties (52.1, 52.2).

3. Procédé de fabrication d'une pièce en matériau composite selon la revendication 1 ou 2, **caractérisé en ce qu'**il consiste à utiliser un contre-moule (54) comportant une pluralité d'orifices (56) permettant le passage des gaz, et à extraire les gaz dans une enceinte (68) délimitée par une première paroi (66) semi étanche à savoir perméable au gaz et imperméable à un produit apte à former la matrice afin d'obtenir la diffusion du produit apte à former la matrice dans la préforme (50).

4. Procédé de fabrication d'une pièce en matériau composite selon l'une quelconque des revendications précédentes, **caractérisé en ce qu'**il consiste à placer la préforme sur le contre-moule (54) équipé au niveau de sa surface intérieure d'un sac à vide (88) et d'un embout (90) pour aspirer les gaz et maintenir plaquer la préforme contre le contre-moule.

5. Procédé de fabrication d'une pièce en matériau composite selon la revendication 4, **caractérisé en ce qu'**il consiste à compacter la préforme sous vide.

6. Procédé de fabrication d'une pièce en matériau composite selon la revendication 5, **caractérisé en ce qu'**il consiste à compacter la préforme à une température de l'ordre de 100 à 150 °C.

7. Procédé de fabrication d'une pièce en matériau composite selon la revendication 5 ou 6, **caractérisé en ce qu'**on utilise une membrane de compactage (92) formant une enceinte avec le sac à vide (88) dans laquelle est placée la préforme.

8. Procédé de fabrication d'une pièce en matériau composite selon la revendication 7, **caractérisé en ce qu'**il consiste à utiliser une membrane avec des formes adaptées à la préforme pour ne pas écraser ladite préforme au niveau des angles.

9. Dispositif pour la fabrication d'une pièce en matériau composite avec une forme en creux et comportant une préforme de fibres (50) noyée dans une matrice, ledit dispositif comportant un moule (52) en contact avec la surface de la pièce à réaliser à l'extérieur de la forme en creux et un contre-moule (54) en contact avec la surface de la pièce à réaliser à l'intérieur de la forme en creux, le moule (52) étant réalisé en au moins deux parties (51.1, 52.2), ledit dispositif comprenant des moyens (78) pour maîtriser l'écartement desdites au moins deux parties (52.1, 52.2) **caractérisé en ce que** les deux parties sont jointives grâce au phénomène de dilatation lors de la phase de polymérisation.

10. Dispositif pour la fabrication d'une pièce en matériau composite selon la revendication 9, **caractérisé en ce que** les moyens (78) pour maîtriser l'écartement desdites au moins deux parties (52.1, 52.2) du moule comprennent des moyens de guidage pour autoriser un mouvement d'écartement entre les deux parties (52.1, 52.2) du moule et des butées contre lesquelles peuvent prendre appui les deux parties (52.1, 52.2) du moule au moins lors de la phase de polymérisation pour maîtriser l'écartement entre lesdites parties (52.1, 52.2).

11. Dispositif pour la fabrication d'une pièce en matériau composite selon la revendication 9 ou 10, **caractérisé en ce que** le contre-moule (54) comprend des rebords (62) susceptibles de prendre appui au moins lors de la phase de polymérisation contre des épaulements prévus au niveau du moule (52).

## Claims

1. Process for manufacturing a piece made of composite material with a hollow form and comprising a fiber preform (50) that is embedded in a matrix, consisting in placing said preform (50) in a first chamber (64) that is delimited by a mold (52) that is in contact with the surface of the piece to be produced outside of the hollow form and a counter-mold (54) that is in contact with the surface of the piece to be produced inside of the hollow form, said process consists in using a mold (52) that is made in at least two parts (52.1, 52.2) and means (78) for controlling the spacing of said at least two parts (52.1, 52.2) **characterized in that** the two parts are contiguous using the expansion phenomenon during the polymerization phase.

2. Process for manufacturing a piece made of composite material according to Claim 1, wherein it consists in using guide means for controlling the spacing of said at least two parts (52.1, 52.2) and for allowing a spacing movement between the two parts (52.1, 52.2) of the mold and stops against which the two parts (52.1, 52.2) of the mold can rest at least during the polymerization phase for controlling the spacing between said parts (52.1, 52.2).

3. Process for manufacturing a piece made of composite material according to Claim 1 or 2, wherein it consists in using a counter-mold (54) that comprises a number of openings (56) that enable gases to pass and in extracting gases in a chamber (68) that is delimited by a first semi-sealed wall (66), namely gas-permeable and impermeable to a product that can form the matrix so as to achieve the diffusion of the product that is able to form the matrix in the preform (50).

4. Process for manufacturing a piece made of composite material according to any one of the preceding claims, wherein it consists in placing the preform on the counter-mold (54) that is equipped at its inside surface with a vacuum bag (88) and an end fitting (90) for drawing in gases and keeping the preform flattened against the counter-mold.

5. Process for manufacturing a piece made of composite material according to Claim 4, wherein it consists in compacting the preform under vacuum.

6. Process for manufacturing a piece made of composite material according to Claim 5, wherein it consists in compacting the preform at a temperature on the order of 100 to 150°C.

7. Process for manufacturing a piece made of composite material according to Claim 5 or 6, wherein a compacting membrane (92) that forms a chamber with the vacuum bag (88), in which the preform is placed, is used.

8. Process for manufacturing a piece made of composite material according to Claim 7, wherein it consists in using a membrane with forms that are suitable for the preform so as not to crush said preform at the angles.

9. Device for manufacturing a piece made of composite material with a hollow form and comprising a fiber preform (50) that is embedded in a matrix, whereby said device comprises a mold (52) that is in contact with the surface of the piece to be produced outside of the hollow form and a counter-mold (54) that is in contact with the surface of the piece to be produced inside the hollow form, the mold (52) being made in at least two parts (51.1, 52.2), said device comprising means (78) for controlling the spacing of said at least two parts (52.1, 52.2), **characterized in that** the two parts are contiguous using the expansion phenomenon during the polymerization phase,

10. Device for manufacturing a piece made of composite material according to Claim 9, wherein the means (78) for controlling the spacing of said at least two parts (52.1, 52.2) of the mold comprise guide means for allowing a spacing movement between the two parts (52.1, 52.2) of the mold and stops against which the two parts (52.1, 52.2) of the mold can rest at least during the polymerization phase for controlling the spacing between said parts (52.1, 52.2).

11. Device for manufacturing a piece made of composite material according to Claim 9 or 10, wherein the counter-mold (54) comprises edges (62) that can rest at least during the polymerization phase against shoulders provided at the mold (52).

## Patentansprüche

1. Verfahren zur Herstellung eines Teils aus Verbundmaterial mit einer Hohlform und mit einer Vorform (50) aus in eine Matrix getränkten Fasern, das darauf beruht, die Vorform (50) in eine erste Fassung (64) einzubringen, die auf der Außenseite der Hohlform von einer Form (52) in Kontakt mit der Oberfläche des herzustellenden Teils begrenzt ist und die im Inneren der Hohlform durch eine Gegenform (54) in Kontakt mit der Oberfläche des herzustellenden Teils begrenzt ist, wobei das Verfahren darauf beruht, eine Form (52) aus wenigstens zwei Bestandteilen (52.1, 52.2) und Mittel (78) zu verwenden, um die Beabstandung der wenigstens zwei Bestandteile (52.1, 52.2) zu bewältigen, **dadurch gekennzeichnet, dass** die zwei Bestandteile aufgrund des Phänomens der Ausdehnung während der Polymerisationsphase aneinander liegen.

2. Verfahren zur Herstellung eines Teils aus Verbundmaterial nach Anspruch 1, **dadurch gekennzeichnet, dass** es darauf beruht, zur Bewältigung der Beabstandung der zwei Bestandteile (52.1, 52.2) Führungsmittel zu verwenden, um eine Abstandsbewegung zwischen den zwei Bestandteilen (52.1, 52.2) der Form zu gewährleisten, und Anschläge, gegen die sich die zwei Bestandteile (52.1, 52.2) der Form wenigstens während der Polymerisationsphase abstützen können, um die Beabstandung zwischen den Bestandteilen (52.1, 52.2) zu bewältigen.

3. Verfahren zur Herstellung eines Teils aus Verbundmaterial nach Anspruch 1 oder 2, dadurch gekenntzeichnet, dass es darauf beruht, eine Gegenform (54) zu verwenden, die eine Vielzahl von Öffnungen (56) aufweist, die ein Hindurchtreten von Gasen gestatten, und das darauf beruht, die Gase in einer Fassung (68) abzuführen, die von einer ersten halbdurchlässigen Wand begrenzt ist, nämlich durchlässig für Gase und undurchlässig für ein Produkt, das geeignet ist, die Matrix zu bilden, um die Diffusion des zum Formen der Matrix geeigneten Produkts in der Vorform (50) zu erreichen.

4. Verfahren zur Herstellung eines Teils aus Verbundmaterial nach einem der vorhergehenden Ansprüche, **dadurch gekennzeichnet, dass** es darauf beruht, die Vorform auf die Gegenform (54) aufzubringen, die im Bereich ihrer inneren Oberfläche mit einem Vakuumbeutel (88) und mit einer Tülle (90) versehen ist, um die Gase anzusaugen und die Vorform gegen die Gegenform zu pressen.

5. Verfahren zur Herstellung eines Teils aus Verbundmaterial nach Anspruch 4, **dadurch gekennzeichnet, dass** es darauf beruht, die Vorform unter Vakuum zu verdichten.

6. Verfahren zur Herstellung eines Teils aus Verbundmaterial nach Anspruch 5, **dadurch gekennzeichnet, dass** es darauf beruht, die Vorform bei einer Temperatur in der Größenordnung von 100 bis 150°C zu verdichten.

7. Verfahren zur Herstellung eines Teils aus Verbundmaterial nach Anspruch 5 oder 6, **dadurch gekennzeichnet, dass** eine Verdichtungsmembran (92) verwendet wird, die mit dem Vakuumbeutel (88) eine Fassung bildet, in der die Vorform angeordnet ist.

8. Verfahren zur Herstellung eines Teils aus Vesrbundmaterial nach Anspruch 7, **dadurch gekennzeichnet, dass** es darauf beruht, eine Membran mit Formen zu verwenden, die an die Vorform angepasst sind, um die Vorform im Bereich der Ecken nicht zu zerstören.

9. Vorrichtung für die Herstellung eines Teils aus Verbundmaterial mit einer Hohlform und mit einer Vorform (50) aus in eine Matrix getränkten Fasern, wobei die Vorrichtung auf der Außenseite der Hohlform eine Form (52) in Kontakt mit der Oberfläche des herzustellenden Teils aufweist und im Inneren der Hohlform eine Gegenform (54) in Kontakt mit der Oberfläche des herzustellenden Teils aufweist, wobei die Form (52) in wenigstens zwei Bestandteilen (52.1, 52.2) ausgeführt ist und die Vorrichtung Mittel (78) aufweist, um die Beabstandung der wenigstens zwei Bestandteile (52.1, 52.2) zu bewältigen, **dadurch gekennzeichnet, dass** die zwei Bestandteile aufgrund des Phänomens der Ausdehnung während der Polymerisationsphase aneinander liegen.

10. Vorrichtung für die Herstellung eines Teils aus Verbundmaterial nach Anspruch 9, **dadurch gekennzeichnet, dass** die Mittel (78) zum Bewältigen der Beabstandung der wenigstens zwei Bestandteile (52.1, 52.2) der Form Führungsmittel aufweisen, um eine Abstandsbewegung zwischen den zwei Bestandteilen (52.1, 52.2) der Form zu gestatten, und Anschläge, gegen die die zwei Bestandteile (52.1, 52.2) der Form sich wenigstens während der Polymerisationsphase stützen können, um die Beabstandung zwischen den Bestandteilen (52.1, 52.2) zu bewältigen.

11. Vorrichtung für die Herstellung eines Teils aus Verbundmaterial nach Anspruch 9 oder 10, **dadurch gekennzeichnet, dass** die Gegenform (54) Kanten (62) aufweist, die dazu geeignet sind, sich wenigstens während der Polymerisationsphase auf Absätze im Bereich der Form (52) stützen zu können.
